(19) Europäisches Patentamt
European Patent Office
Office européen des brevets

(11) **EP 2 288 532 B1**

(12) **EUROPÄISCHE PATENTSCHRIFT**

(45) Veröffentlichungstag und Bekanntmachung des Hinweises auf die Patenterteilung:
**26.12.2012 Patentblatt 2012/52**

(51) Int Cl.:
*B62D 6/00* (2006.01)  *B62D 11/24* (2006.01)
*B62D 9/00* (2006.01)  *B62D 11/00* (2006.01)

(21) Anmeldenummer: **09761497.8**

(22) Anmeldetag: **12.06.2009**

(86) Internationale Anmeldenummer:
**PCT/EP2009/004213**

(87) Internationale Veröffentlichungsnummer:
**WO 2009/149934 (17.12.2009 Gazette 2009/51)**

(54) **VORRICHTUNG UND VERFAHREN ZUR BEEINFLUSSUNG DER FAHRZEUGQUERDYNAMIK**

DEVICE AND METHOD FOR INFLUENCING THE TRANSVERSE DYNAMICS OF A VEHICLE

DISPOSITIF ET PROCÉDÉ DESTINÉS À AGIR SUR LA DYNAMIQUE TRANSVERSALE D'UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.06.2008 DE 102008028079**
**10.06.2009 DE 102009025058**

(43) Veröffentlichungstag der Anmeldung:
**02.03.2011 Patentblatt 2011/09**

(73) Patentinhaber: **Volkswagen Aktiengesellschaft 38440 Wolfsburg (DE)**

(72) Erfinder: **BAUMGARTEN, Götz 38106 Braunschweig (DE)**

(56) Entgegenhaltungen:
EP-A- 1 886 901    GB-A- 2 435 023
GB-A- 2 437 503    US-A- 6 154 696
US-A1- 2004 238 238    US-A1- 2007 005 214
US-B1- 6 505 702

**Beschreibung**

Die Erfindung bezieht sich auf das Gebiet der der Fahrzeugdynamik und insbesondere auf eine aktive Beeinflussung des Gierwinkels von Kraftfahrzeugen. Insbesondere bezieht sich die Erfindung auf ein Kraftfahrzeug nach dem Oberbegriff von Patentanspruch 1 sowie auf eine Vorrichtung zur Beeinflussung der Fahrzeugquerdynamik eines Kraftfahrzeugs nach dem Oberbegriff von Patentanspruch 15.

Herkömmliche offene Differentiale ermöglichen eine Kurvenfahrt eines Kraftfahrzeugs, indem an den Fahrzeugrädern unterschiedliche Drehzahlen zugelassen werden. Das Antriebsmoment wird gleichmäßig auf beide Räder übertragen. Jedoch sind hierbei die fahrdynamischen Eigenschaften dahingehend eingeschränkt, dass die Traktion des Rads mit der besseren Haftung durch das Rad mit der geringeren Haftung beschränkt wird. Dies macht sich insbesondere bei glatter Fahrbahn oder bei schneller Kurvenfahrt unvorteilhaft bemerkbar.

Mittels eines Sperrdifferenzials, das die Antriebsräder z.B. durch Reibung zumindest teilweise miteinander koppelt, können Traktion und Fahrdynamik verbessert werden. Durch die Sperrung wird jedoch die Kurvenfahrt erschwert, so dass das Fahrzeug zum Untersteuern neigt. Regelbare Differenzialsperren kombinieren die Kurvenwilligkeit eines offenen Differenzials mit der verbesserten Traktion eines Sperrdifferenzials. Durch eine intelligente Logik, die den jeweiligen Fahrzustand berücksichtigt, wird das Differenzial nur in dem Maß geschlossen, wie es die Fahrsituation erfordert. Gleichwohl ist auch ein geregeltes Sperrdifferenzial nur in ganz bestimmten Ausnahmesituationen in der Lage, ein Fahrzeug kurvenwilliger machen. Die vorteiligen Eigenschaften eines Quersperrenprinzips lassen sich überwiegend nur im Grenzfahrbereich erfahren. Prinzipbedingt kann ein Sperrdifferenzial bestehende Drehzahlunterschiede nicht vergrößern bzw. ein größeres Moment auf ein schneller drehendes Rad übertragen.

Weiterhin ist allgemein bekannt, durch automatische Bremseingriffe den Gierwinkel eines Kraftfahrzeugs zu beeinflussen, um Fahrzeugdynamik und Fahrsicherheit zu verbessern. Nachteilig ist dabei jedoch, dass beim Bremseingriff Antriebsenergie in Reibungsverluste umgesetzt wird.

Torque Vectoring Differenziale, wie sie beispielsweise aus DE 103 17 316 A1, DE 10 2004 001 019 A1, DE 10 2005 040 253 B3, DE 10 2007 020 356 A1 oder US 7,267,628 B2 bekannt sind, ermöglichen es, wahlweise das schnellere oder langsamere Rad mit höherem Moment zu versorgen. Hierbei wird ein im Prinzip beliebig vorgebbares Antriebsmoment an einem Rad subtrahiert und am gegenüberliegenden Rad addiert. Die Summe der Antriebsmomente beider Räder bleibt gleich, so dass die Fahrgeschwindigkeit nicht beeinflusst wird. Durch Torque Vectoring, d.h. eine Ansteuerung des Torque Vectoring Differenzials zwecks gezielter Verteilung des Antriebsmoments auf die Fahrzeugräder kann bei dynamischem Fahren die Stabilität des Fahrzeugs verbessert werden, so dass ein Eingriff eines ESP hinausgezögert wird. Sobald allerdings das ESP einen kritischen Fahrzustand erkennt, übernimmt es die Kontrolle und deaktiviert das Torque Vectoring System. In US 7,267,628 B2 wird Torque Vectoring dazu eingesetzt, ein Übersteuern oder Untersteuern bzw. ein Abweichen eines gemessenen Gierwinkels von einem rechnerischen vorgegebenen Gierwinkel zu kompensieren. Der "Normalfahrer" gelangt jedoch äußerst selten in stabilitätskritische Fahrsituationen, so dass für diesen ein Torque Vectoring Differenzial lediglich ein kostenträchtiges Extra ohne großen praktischen Nutzen darstellt.

Ein Kraftfahrzeug nach dem Oberbegriff von Patentanspruch 1 sowie eine Vorrichtung nach dem Oberbegriff von Patentanspruch 15 sind aus US 2007/005214 A1 bekannt. Auch hier wird, wie in US 7,267,628 B2, Torque Vectoring in herkömmlicher Weise zur Verbesserung der Fahrstabilität im Grenzbereich der Fahrdynamik eingesetzt.

Weiterhin ist aus GB 2 435 023 A ein Parkassistent bekannt, bei dem durch unterschiedliche Antriebsmomente an den Fahrzeugrädern das Einparken erleichtert wird.

Vor diesem Hintergrund liegt der Erfindung die Aufgabe zugrunde, die Fahrdynamik eines Kraftfahrzeugs im Betriebsbereich eines "Normalfahrers" zu verbessern.

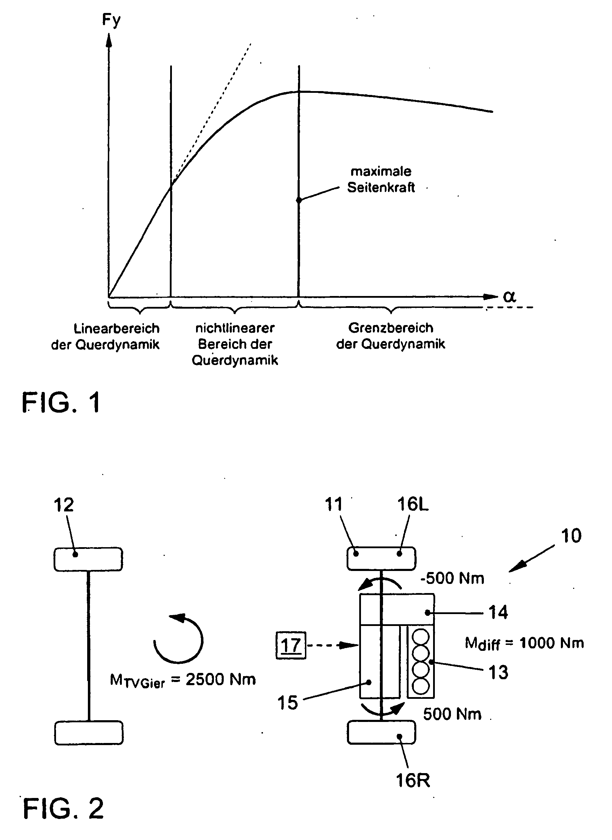

Der hier zugrundegelegte Normalfahrer meidet den querdynamischen Grenzbereich bzw. Querbeschleunigungswerte größer als 4 m/s$^2$ (trockene Fahrbahn). Er hält sich lediglich im linearen Bereich der Querdynamik auf, in dem die Reifenseitenkraft eine lineare Funktion des Schräglaufwinkels ist (vgl. Fig. 1). Ein Untersteuern, welches durch Reifensättigung der Vorderräder durch hohe Schräglaufwinkel entsteht, tritt bei seiner Fahrweise in der Regel nicht auf. Desweiteren vermeidet er schnelle Lenkbewegungen, die das Fahrzeug an die Grenze seiner Agilität bringen. Ferner vermeidet er, während der Kurvenfahrt Gasstösse (annähernd impulsartige Verstellung des Gaspedals) oder Bremseingaben zu geben, da das Fahrzeug dann den vom Fahrer "eingestellten" Kurvenradius verlässt. Ein solches Fahrverhalten tritt nur selten bei unvorhergesehenen Verkehrssituationen auf.

Die oben genannte Aufgabe wird durch ein Kraftfahrzeug gemäß Patentanspruch 1 sowie durch ein Verfahren gemäß Patentanspruch 15 gelöst. Vorteilhafte Ausgestaltungen sind in weiteren Patentansprüchen angegeben.

Durch Kombination einer Fahrzeuglenkung mit mechanisch bedingter Lenkübersetzung mit einer Vorrichtung zur Verteilung eines Antriebsmoments auf die Räder einer angetriebenen Fahrzeugachse gemäß einem vorgebbaren Verteilungssollwert kann im Linearbereich der Querdynamik einem über die Fahrzeuglenkung erzeugten Giermoment ein zusätzliches Giermoment überlagert werden, das durch die mindestens eine Vorrichtung (15) zur Verteilung eines Antriebsmoments erzeugt wird.

Insbesondere kann eine stationäre Lenkverstärkung erzielt werden, die von der rein mechanisch bedingten Lenkverstärkung der Lenkung abweicht. Die stationäre Lenkverstärkung kann als Verhältnis aus Gierrate $\dot{\psi}$ und Lenkwinkel $\delta$, Querbeschleunigung $a_y$ und Lenkwinkel ö oder Schwimmwinkel $\beta$ und Lenkwinkel $\delta$ definiert werden, wobei hier jeweils lediglich der Linearbereich der Querdynamik betrachtet wird. Die stationäre Lenkverstärkung setzt sich dabei aus einer Komponente der Lenkung und einer aus der Antriebsmomentverteilung resultierenden Komponente zusammen. Die Komponente aus der Antriebsmomentverteilung kann als äquivalenter Überlagerungswinkel interpretiert werden, dem jedoch kein tatsächlicher Lenkeinschlag entspricht. Hierdurch kann im Linearbereich der Querdynamik, in welchem sich der oben definierte "Normalfahrer" üblicherweise aufhält, die Fahrdynamik verändert werden. Je nach Fahrsituation kann dabei eine direktere oder indirektere Lenkübersetzung eingestellt werden. Algorithmen zur Erkennung verschiedener Fahrsituationen sind beispielsweise im Kontext mit Überlagerungslenkungen, die auch als "Aktivlenkung" oder Dynamiklenkung" bezeichnet werden, bekannt. Bei diesen wird ein Überlagerungswinkel jedoch auf andere Art und Weise, nämlich mit Hilfe eines Überlagerungsgetriebes, erzeugt.

Regelungstechnisch betrachtet kann man die stationäre Lenkverstärkung beispielsweise durch einen stationären Verstärkungsfaktor ausdrücken, der wie folgt definiert sein kann:

$$f_{Lenkw2Gierrate} = \dot{\psi} / \delta$$

oder

$$f_{Lenkw2Schwimmw} = \beta / \delta$$

oder

$$f_{Lenkw2Querbeschl} = a_y / \delta,$$

Dabei stellt $\delta$ den Lenkwinkel, $\dot{\psi}$ die Gierrate, $a_y$ die Querbeschleunigung und $\beta$ den Schwimmwinkel dar. Der stationäre Verstärkungsfaktor weist eine über die Lenkung erzeugte Komponente und eine durch die mindestens eine Vorrichtung (15) zur Verteilung eines Antriebsmoments erzeugte Komponente auf. Letztere wird als Verteilungssollwert der mindestens einen Vorrichtung (15) zur Verteilung eines Antriebsmoments aufgeschaltet.

Gemäß einer vorteilhaften Ausgestaltung ist das Steuergerät derart konfiguriert, dass durch die mindestens eine Vorrichtung zur Verteilung eines Antriebsmoments das über die Fahrzeuglenkung erzeugte Giermoment erhöht wird. Es ergibt sich hierdurch die Wirkung wie bei einer direkteren Lenkübersetzung. Zwar ist die Wirkstärke wesentlich geringer als bei einer herkömmlichen Überlagerungslenkung. Während eine Überlagerungslenkung den Lenkwinkelbedarf beliebig reduzieren kann, wird vorliegend lediglich eine vergleichsweise kleine Reduktion des Lenkwinkelbedarfs erreicht. Die über die Vorrichtung zur Verteilung eines Antriebsmoments darstellbare Veränderung ist jedoch hinreichend groß, um für den Fahrer eine spürbar direktere Lenkübersetzung bereitzustellen.

Gemäß einer weiteren vorteilhaften Ausgestaltung kann das Steuergerät auch derart konfiguriert sein, dass durch die Vorrichtung zur Verteilung eines Antriebsmoments das über die Fahrzeuglenkung erzeugte Giermoment vermindert wird. Die damit verbundene Wirkung wie bei einer indirekteren Lenkübersetzung ist beispielsweise bei höheren Geschwindigkeiten von Vorteil, da hierdurch die Fahrzeugreaktionen auf Lenkwinkelveränderungen am Lenkrad gemildert werden.

Selbstverständlich können die beiden vorstehend genannten Funktionalitäten auch gleichzeitig im Steuergerät vorgehalten und fahrsituationsabhängig eingestellt werden.

Insbesondere kann ferner eine die Ansteuerung der Vorrichtung zur Verteilung eines Antriebsmoments derart vorgenommen sein, dass eine vom Lenkwinkel abhängige variable Lenkübersetzung dargestellt wird.

Vorzugsweise nimmt die Lenkübersetzung ausgehend von einer Mittelstellung eines Lenkrades mit zunehmendem Lenkwinkel ab. Hierdurch kann beispielsweise das Einparken, bei dem große Lenkwinkel auftreten, durch eine Verminderung der vom Fahrer am Lenkrad aufzubringenden Kraft erleichtert werden.

Die Lenkübersetzung kann insbesondere auch fahrgeschwindigkeitsabhängig sein, derart, dass bei geringer Fahrgeschwindigkeit eine direktere, d.h. kleinere Lenkübersetzung, bei höherer Fahrgeschwindigkeit hingegen eine indirektere, d.h. größere Lenkübersetzung vorgegeben wird.

Gemäß einer weiteren vorteilhaften Ausgestaltung ist der Verteilungssollwert eine mathematische Funktion des Lenkwinkels, der über einen Lenkwinkelsensor erfasst wird. Der Verteilungssollwert lässt sich so verhältnismäßig einfach bestimmen. Bevorzugt geht der Lenkwinkel als Faktor in die mathematische Funktion für den Verteilungssollwert ein. Diese Funktion kann insbesondere als das Produkt des Lenkwinkels und eines Verstärkungsfaktors dargestellt werden. Letztere kann wiederum von Größen wie der Fahrgeschwindigkeit und/oder anderen abhängig sein.

Gemäß einer weiteren vorteilhaften Ausgestaltung ist die Komponente aus der Antriebsmomentverteilung manuell zu- und ausschaltbar. Dadurch kann beispielsweise durch den Fahrer zwischen einer sportlicheren Fahrdynamik bzw. der Wirkung einer direkteren Lenkübersetzung und einem Normalmodus mit weniger direkter Lenkübersetzung gewählt werden:

Nachfolgend wird die Erfindung anhand eines in der Zeichnung dargestellten Ausführungsbeispiels näher erläutert. Die Zeichnung zeigt in:

Fig. 1    den Verlauf der Reifenseitenkraft $F_y$ in Abhängigkeit des Schräglaufwinkels $\alpha$ der angetriebenen Fahrzeugräder

Fig. 2    eine Darstellung eines Kraftfahrzeugs zur Veranschaulichung der Wirkung von Torque Vectoring,

Fig. 3    den stationären Zusammenhang von Lenkwinkel $\delta$ und Querbeschleunigung $a_y$, und in

Fig. 4    eine Darstellung eines Kraftfahrzeugs gemäß einem Ausführungsbeispiel der Erfindung.

Die Fahrdynamik eines Kraftfahrzeugs kann entsprechend den Fahrzeugachsen in Längs-, Quer- und Vertikaldynamik aufgeteilt werden. Im Folgenden soll im Wesentlichen nur die Fahrzeugquerdynamikbeeinflussung betrachtet werden. Dazu relevante Fahrzeugbewegungsgrößen sind die Gierrate $\dot{\psi}$, der Schwimmwinkel $\beta$, die Querbeschleunigung $a_y$, sowie der Schräglaufwinkel $\alpha$ und die Reifenseitenkraft $F_y$. Für den Fahrer eines Fahrzeuges ist die relevante Eingabegröße für die Querdynamik der Lenkwinkel $\delta$ am Lenkrad.

Die Querdynamikeigenschaften eines Kraftfahrzeugs lassen sich bei Auftragung der Reifenseitenkraft $F_y$ über dem Schräglaufwinkel $\alpha$ in verschiedene Bereiche einteilen, die in Figur 1 dargestellt sind. Im linearen Bereich der Querdynamik haftet der Reifen bzw. haften die Reifenstollen (das Reifenprofil) auf der Fahrbahn; der Zusammenhang zwischen Reifenseitenkraft $F_y$ und Schräglaufwinkel $\alpha$ ist linear. Im anschließenden Bereich höherer Schräglaufwinkel $\alpha$ nimmt die Haftung des Reifens mit größeren Schräglaufwinkeln $\alpha$ ab; der Zusammenhang zwischen Reifenseitenkraft $F_y$ und Schräglaufwinkel $\alpha$ ist nicht-linear. Im Grenzbereich der Querdynamik, in dem der Reifen im Wesentlichen komplett auf der Fahrbahn rutscht, ist dieser Zusammenhang ebenfalls nicht-linear, wobei mit zunehmendem Schräglaufwinkel $\alpha$ die Reifenseitenkraft $F_y$ sogar wieder etwas abnimmt.

Das sogenannte Torque Vectoring, im Folgenden gelegentlich mit TV abgekürzt, erzeugt durch eine gezielte Aufteilung eines Antriebsmoments auf die Fahrzeugräder einer Achse durch entsprechende Umfangskräfte an den Rädern ein Giermoment am Fahrzeug und verändert damit die Querdynamik. Eine derartige Querdynamikbeeinflussung ist im stabilitätsunkritischen, linearen Bereich als auch im stabilitätskritischen, nicht-linearen Bereich möglich.

Im nachfolgend näher betrachteten Linearbereich der Querdynamik ergibt sich die Wirkung von Torque Vectoring auf die Bewegungsgrößen durch einen Faktor f, nämlich für

die stationäre Gierrate $\dot{\psi}$ als      $\dot{\psi} = f_{TV2Gierrate} * M_{TVGier}$

den stationären Schwimmwinkel $\beta$ als      $\beta = f_{TV2Schwimmw} * M_{TVGier}$

die stationäre Querbeschleunigung $a_y$      $a_y = f_{TV2Querbeschl} * M_{TVGier}$.

Durch ein Torque Vectoring Differenzial wie es beispielsweise aus den eingangs genannten Druckschriften DE 103 17 316 A1, DE 10 2004 001 019 A1, DE 10 2005 040 253 B3, DE 10 2007 020 356 A1 und US 7,267,628 B2 bekannt ist, wird das durch Torque Vectoring erzeugte Giermoment um die Fahrzeughochachse $M_{TVGier}$ durch ein Differenzmoment $M_{Diff}$ erhalten, welches die durch Torque Vectoring erzeugte Differenz der Momente der linken und rechten Radantriebswellen darstellt. Der Zusammenhang zwischen dem Differenzmoment $M_{Diff}$ und dem TV-Giermoment $M_{TVGier}$ ist ein einfacher Faktor $f_{TVGier2TVDiff}$, der nur vom Radradius $r_{Rad}$ und der Spurweite $s_{Spur}$, abhängt:

$$M_{Diff} = 2 * r_{Rad}/s_{Spur} * M_{TVGier} = f_{TVGier2TVDiff} * M_{TVGier}$$

Mit der vorliegenden Erfindung wird der Linearbereich der Querdynamik auf einfache Weise beeinflusst, um damit das Fahrzeugfahrverhalten in Bezug auf die Querdynamikeigenschaften für den Fahrer zu verbessern.

Generell ist in Bezug auf das Lenkverhalten zwischen einem dynamischen und stationären Anteil zu unterscheiden. Bei der Beaufschlagung der Lenkung mit einem Lenksprung werden sowohl das stationäre Lenkverhalten beeinflusst als auch das dynamische Lenkverhalten angeregt. Letzteres ist in der Regel nach einer oder innerhalb weniger Sekunden abgeklungen, so dass danach nur noch das stationäre Verhalten vorliegt.

Im Linearbereich der Querdynamik lässt sich der stationäre Anteil als Zusammenhang zwischen der Eingangsgröße, dem Lenkwinkel $\delta$ am Lenkrad, und der Ausgangsgröße, d.h. der Gierrate $\dot{\psi}$, der Querbeschleunigung $a_y$ oder dem Schwimmwinkel $\beta$, durch einen Faktor f darstellen, nämlich für

die stationäre Gierrate $\dot{\psi}$ als      $\dot{\psi} = f_{Lenkw2Gierrate} * \delta$

den stationären Schwimmwinkel $\beta$ als      $\beta = f_{Lenkw2Schwimmw} * \delta$

die stationäre Querbeschleunigung $a_y$      $a_y = f_{Lenkw2Querbeschl} * \delta.$

Der dynamische Anteil ist nur dann deutlich spürbar, wenn der Fahrer das Fahrzeug mit ausreichend schnellen und großen Lenkbewegungen anregt. Im Fahralltag treten solche Lenkbewegungen nur selten auf. Jedoch treten Phasen, in denen der Fahrer den Lenkwinkel konstant hält und langsame Lenkbewegungen für die Übergänge zwischen Geradeausfahrt und Kurvenfahrt ausführt, bei jeder Fahrt gezwungenermaßen auf. In diesen Phasen wird das dynamische Verhalten somit nicht ausreichend angeregt und wird für den Fahrer nicht spürbar. Das stationäre Verhalten tritt jedoch in jeder Kurve sichtbar für den Fahrer hervor.

Desweiteren ist zu beachten, dass der eingangs genannte "Normalfahrer" mit durchschnittlichem Fahrkönnen große Querbeschleunigungen vermeidet. Dadurch werden lediglich der Linearbereich der Reifen und somit lediglich das Verhalten des Fahrzeugs im Linearbereich der Querdynamik angeregt (vgl. Fig. 1). Zusammengefasst regt ein "Normalfahrer" mit durchschnittlichem Fahrkönnen in der Querdynamik nur das stationäre Verhalten im Linearbereich der Querdynamik an. Die Erfindung geht somit von der Erkenntnis aus, dass die Beeinflussung des linearen Querdynamikbereichs für den Fahrer während üblicher Lenkbewegungen spürbar ist und das Fahrzeugfahrverhalten verbessert. Dies wird vorliegend durch ein Torque Vectoring System bewerkstelligt.

Dazu wird aus dem Lenkwinkel bzw. einem korrespondierenden Signal ein Sollwert für das Differenzmoment $M_{sollDiff}$ über einen Umrechnungsfaktor ermittelt, der als Stellwert an ein Torque Vectoring Differenzial gegeben und dort zu einem TV-Differenzmoment $M_{Diff}$ umgesetzt wird:

$$M_{SollDiff} = f_{FunktionszielstatQuerdyn} * \delta$$

Dabei entspricht bei stationärer Fahrt (z.B. stationärer Kreisfahrt) der Istwert $M_{Diff}$ genau dem Sollwert $M_{sollDiff}$, so dass unter Einbeziehung der obigen Beziehungen gilt:

$$M_{Diff} = f_{FunktionszielstatQuerdyn} * \delta =$$

bzw. für das Giermoment

$$M_{TVGier} = M_{Diff} / f_{TVGier2TVDiff} = f_{FunktionszielstatQuerdyn} / f_{TVGier2TVDiff} * \delta$$

Durch diese Einflussnahme auf die Fahrzeugbewegung geschieht mit dem stationären Verhalten des Fahrzeugs Folgendes, hier erklärt am Beispiel der Gierrate $\dot{\psi}$. Für den Schwimmwinkel $\beta$ und die Querbeschleunigung $a_y$ gilt dies analog. Nun wirkt nicht nur der Lenkwinkel auf das Fahrzeug, sondern zusätzlich auch das Giermoment des Torque Vectoring Systems. Dadurch wird die durch den Fahrer spürbare Querdynamik deutlich verbessert. Es gilt für die stationäre Gierrate:

$$\dot{\Psi} = f_{Lenkw2Gierrate} * \delta + f_{TV2Gierrate} * \dot{M}_{TVGier}$$

bzw., wenn man das TV-Giermoment $M_{TVGier}$ ersetzt,

$$\dot{\Psi} = f_{Lenkw2Gierrate} * \delta + f_{TV2Gierrate} * f_{FunktionszielstatQuerdyn} / f_{TVGier2TVDiff} * \delta$$

Wenn man den Lenkwinkel $\delta$ faktorisiert, erhält man

$$\dot{\Psi} = \delta * (f_{Lenkw2Gierrate} + f_{TV2Gierrate} * f_{FunktionszielstatQuerdyn} / f_{TVGier2TVDiff})$$

Nun wird klar, wie durch das Torque Vectoring System der stationäre Faktor $f_{Lenkw2Gierrate}$ des Fahrzeugs (Lenkradwinkel nach Gierrate) geändert wurde. Der geänderte Faktor definiert sich wie folgt:

$$f_{Lenkw2Gierrate\ TV} = f_{Lenkw2Gierrate} + f_{TV2Gierrate} * f_{FunktionszielstatQuerdyn} / f_{TVGier2TVDiff}$$

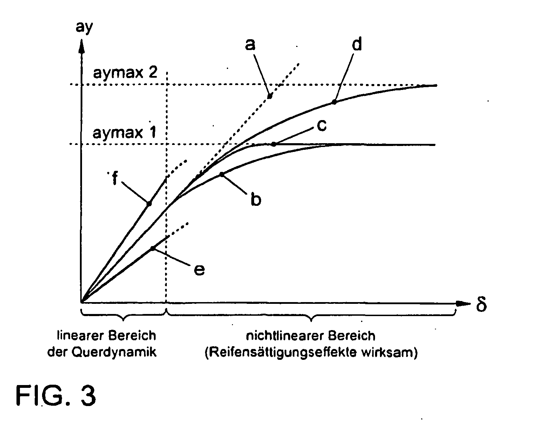

Torque Vectoring kann zur Erzielung verschiedener Effekte eingesetzt werden. Diese sollen nachfolgend anhand von Fig. 2 und 3 näher erläutert werden. Das in Figur 2 dargestellt Fahrzeug 10 umfasst eine angetriebene Vorderachse 11 und eine nicht angetriebene Hinterachse 12, jedoch ist ein Einsatz auch bei allradgetriebenen Kraftfahrzeugen möglich. Über einen Antriebsmotor 13 und ein Getriebe 14 wird ein Antriebsmoment bereitgestellt, das über eine Vorrichtung 15 zur Verteilung eines Antriebsmoments des Fahrzeugs, beispielsweise ein Torque Vectoring Differenzial der oben genannten Art auf die angetriebenen Vorderräder 16L und 16R verteilt wird. Über ein Steuergerät 17 kann die Verteilung des Antriebsmoments an das linke und rechte Vorderrad 16L und 16R eingestellt werden. Torque Vectoring Systeme bieten hierfür die größten Freiheitsgrade, da sie ein beliebig vorgebbares Antriebsmoment an einem Rad subtrahieren und am gegenüberliegenden Rad addieren. Die Summe der Antriebsmomente beider Räder bleibt gleich, so dass die Fahrgeschwindigkeit nicht beeinflusst wird. Letzteres gilt beispielsweise auch für eine aktive Quersperre.

In Fig. 2 ist weiterhin angedeutet, wie eine Differenz der Antriebsmomente an den Vorderrädern 16L und 16R zu einem TV-Giermoment $M_{TVGier}$ führt. Die Differenz der Antriebsmomente MDiff ist hier beispielhaft mit 1000 Nm angenommen. Das linke Vorderrad 16L erhält z.B. 500 Nm weniger, das rechte Vorderrad 16R hierfür 500 Nm mehr Antriebsmoment. Aus der Kinematik des Fahrzeugs, resultiert unter Berücksichtigung der oben genannten Beziehung

$$M_{Diff} = 2*r_{Rad}/s_{Spur} * M_{TVGier}$$

ein TV-Giermoment $M_{TVGier}$ von 2500 Nm.

Mit einem derartigen Fahrzeug lässt sich beispielsweise die Agilität des Fahrzeugs verbessern. Dies beinhaltet eine Änderung der dynamischen Reaktion bei Lenkwinkeländerungen, beispielsweise eine Erhöhung der Gierdämpfung durch ein kurvenausdrehendes Giermoment oder eine Erhöhung der Agilität beim schnellen Anlenken durch ein kurveneindrehendes Giermoment.

Weiterhin kann eine Verbesserung des Lastwechselverhaltens durch eine Änderung der Lastwechselreaktion, z. B. durch eine vollständige Unterdrückung der Gierreaktion auf Gas- oder Bremseingaben erzielt werden.

Ferner ist eine Reduzierung von Leistungsuntersteuern, d. h. eine Reduktion der Untersteuertendenz, welche durch starkes Gasgeben verursacht wurde, möglich.

Schließlich kann eine Reduktion der Untersteuertendenz bei großen Lenkwinkeln (ohne Gasgeben) vorgenommen werden. Der durch das Untersteuern verursachte, erhöhte Lenkwinkelbedarf kann wie in Fig. 3 dargestellt kompensiert werden.

Fig. 3 zeigt den Verlauf der Querbeschleunigung $a_y$ in Abhängigkeit des Lenkwinkels $\delta$. Bei stationärer Kurvenfahrt mit konstantem Lenkwinkel $\delta$ ergibt sich ein eindeutiger Zusammenhang zwischen der Querbeschleunigung ay und dem Lenkwinkel $\delta$. Im unteren Lenkwinkelbereich ergibt sich ein linearer Zusammenhang (Verlauf a). Aufgrund von Reifensättigungseffekten endet dieses lineare Verhalten und geht in einen degressiven Verlauf über. Ab einem gewissen Lenkwinkelbetrag ergibt eine weitere Erhöhung des Lenkwinkels $\delta$ keine weitere Erhöhung der Querbeschleunigung $a_y$ mehr, auch als "Untersteuern" bezeichnet. Die maximal erreichbare Querbeschleunigung $a_y$ ist damit $a_{ymax1}$. Ein Fahrzeug ohne Torque Vectoring System weist den Verlauf b) in Fig. 3 auf. Mit einem Torque Vectoring System ist es möglich, den linearen Charakter zu höheren Querbeschleunigungen auszudehnen, wie dies durch Verlauf c) in Fig. 3 gezeigt ist. Bei geeigneter Grundauslegung des mechanischen Fahrwerks kann mit Hilfe eines Torque Vectoring System die maximale Querbeschleunigung $a_y$ entsprechend dem Verlauf d) auch auf $a_{ymax2}$ gesteigert werden. Diese Funktionalitäten sind für den "Normalfahrer", der sich im Normalfahrbetrieb selten in Grenzfahrbereichen aufhält, nicht oder nur selten erfahrbar. Dieser bewegt sich vielmehr in dem in Fig. 3 ebenfalls gekennzeichneten Linearbereich, in dem ein Untersteuern, welches durch Reifensättigung der Vorderräder durch hohe Schräglaufwinkel entsteht, nicht auftritt.

Erfindungsgemäß wird durch den Einsatz von Torque Vectoring im linearen Querbeschleunigungsbereich eine neue Funktionalität geschaffen, die in ihrer Wirkung einer Veränderung der Lenkübersetzung entspricht. Für den Fahrer bleibt die bekannte und gewohnte Linearität der Lenkantwort erhalten.

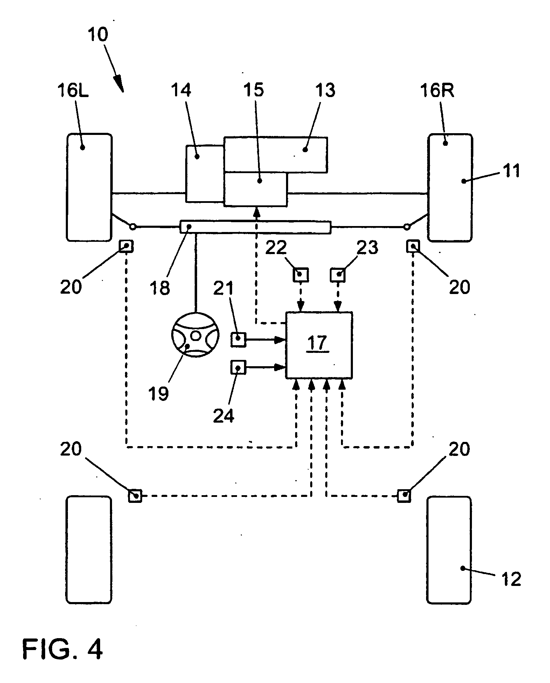

Das in Fig. 4 dargestellte Fahrzeug umfasst zusätzlich zu den im Zusammenhang mit Fig..2 erläuterten Komponenten eine Lenkung 18, über die ein Lenkrad 19 mit den Fahrzeugrädern 16L und 16R mechanisch gekoppelt ist. Die Lenkung kann als Zahnstangenlenkung mit elektrischer oder hydraulischer Lenkunterstützung ausgeführt sein. Sie weist dementsprechend eine durch die mechanischen Komponenten der Lenkung vorgegebene mechanische Lenkübersetzung auf, welche das Verhältnis aus dem Lenkwinkel $\delta$ am Lenkrad 19 zum Radeinschlagwinkel der Vorderräder 16L und 16R darstellt.

Ferner sind verschiedene Sensoren am Fahrzeug vorgesehen, welche die für den Betrieb eines ABS oder ESP erforderlichen Zustandsinformationen liefern. Beispielhaft sind in Fig. 4 vier Raddrehzahlsensoren 20, ein Lenkwinkelsensor 21, ein Gierratensensor 22 und ein Querbeschleunigungssensor 23 dargestellt. Diese liefern ihre Messsignale an das Steuergerät 17.

Dieses Steuergerät 17 ist derart konfiguriert, dass dieses im Linearbereich der Querdynamik in Abhängigkeit von Signalen am Fahrzeug befindlicher Sensoren, beispielsweise den Raddrehzahlsensoren 20 und/oder dem ein Lenkwinkelsensor 21, sowie im Steuergerät 17 abgelegter Algorithmen einen Verteilungssollwert für die Vorrichtung 15 zur Verteilung eines Antriebsmoments des Fahrzeugs, bzw. das Torque Vectoring Differenzial derart bestimmt, dass im Linearbereich der Querdynamik einem über die Fahrzeuglenkung erzeugten Giermoment ein zusätzliches Giermoment des Torque Vectoring Differenzials überlagert wird.

Dazu kann im Steuergerät 17 eine stationäre Lenkverstärkung bestimmt werden, welche das Verhältnis zwischen Lenkwinkel ö und Gierrate $\dot{\psi}$, Querbeschleunigung $a_y$ oder Schwimmwinkel $\beta$ im Linearbereich der Querdynamik repräsentiert. Die stationäre Lenkverstärkung kann regelungstechnisch als stationärer Verstärkungsfaktor $f_{Lenkw2Gierrate}$, $f_{Lenkw2Schwimmw}$, oder $f_{Lenkw2Querbeschl}$ umgesetzt werden. Diese stationäre Lenkverstärkung bzw. ein korrespondierender Verstärkungsfaktor umfasst eine erste Komponente, welche vom Fahrer über eine Lenkungshandhabe, insbesondere ein Lenkrad vorgegeben wird und auf den mechanischen Gegebenheiten der Lenkung sowie einer etwaig vorhandenen Lenkunterstützung durch eine Servoeinheit beruht. Die stationäre Lenkverstärkung umfasst ferner eine zweite Komponente, die über die mindestens eine Vorrichtung 15 zur Verteilung eines Antriebsmoments erzeugt wird. In Kenntnis der aktuellen Fahrzeugparameter, insbesondere des am Lenkrad anliegenden Lenkwinkels $\delta$ sowie der Gierrate $\dot{\psi}$, der Querbeschleunigung $a_y$ oder des Schwimmwinkels $\beta$ kann im Steuergerät 17 das Ausmaß der zweiten Komponente z.B. mittels einer abgelegten Kennlinie, eines Kennfelds, Berechnungsvorschriften oder dergleichen ermittelt werden. Diese zweite Komponente dient als Stellsignal für die Vorrichtung zur Verteilung eines Antriebsmoments 15, um eine ggf. ungleichmäßige Verteilung des Antriebsmoments auf die Vorderräder 16L und 16R, d.h. ein Differenzmoment zwischen diesen zu bewirken und hierdurch ein gewünschtes TV-Giermoment zu erzeugen. Dieses Stellsignal wird nachfolgend auch als Verteilungssollwert bezeichnet. Das TV-Giermoment wird dazu eingesetzt, um im Linearbereich der Querdynamik, d.h. dem Bereich, den der Normalfahrer regelmäßig erlebt, die mechanische Lenkübersetzung zu modifizieren.

Vorteilig ist die Möglichkeit, das Differenzmoment jederzeit bis zum Maximalwert in beide Giermomentrichtungen aufbringen zu können. Das ist z.B. beim Quersperrenprinzip nicht möglich, da dort stets nur eine Richtung des Differenzmoments realisierbar ist. Die Richtung und der dabei erreichbare Maximalwert hängen von der Längs- und Querbeschleunigung ab.

Vorteilig ist weiterhin die Möglichkeit, das Differenzmoment ohne bremsenden Einfluss auf die Fahrgeschwindigkeit aufzubringen, wie es beispielsweise beim Bremseingriff erfolgt, wo Fahrenergie in Wärmeenergie umgesetzt wird. Dort entsteht eine Reduktion der Geschwindigkeit, die entweder die Stärke des Eingriffs massiv beschränkt oder eine kompensierende Erhöhung des Motormoments notwendig macht.

Die erfindungsgemäße Lösung besteht somit darin, ein Torque Vectoring System als "Lenkverstärkung" zur Verminderung oder Erhöhung der Lenkübersetzung einzusetzen, ähnlich wie bei einer Überlagerungslenkung oder wie bei einer Änderung der mechanischen Lenkübersetzung. Damit ist gemeint, die Stationärverstärkung zwischen Lenkwinkel $\delta$ und Gierrate $\dot{\psi}$ bzw. Querbeschleunigung $a_y$ und Schwimmwinkel $\beta$ schon im linearen Bereich der Reifen zu erhöhen, so dass in Fig. 3 z.B. der Verlauf f) erhalten werden kann. Dadurch ist bei gleichem Kurvenradius der notwendige Lenkwinkel kleiner als bei Verlauf b) eines Fahrzeugs ohne Torque Vectoring im Linearbereich. Das gepunktete rechte Ende von Verlauf f) deutet an, dass dieser selbstverständlich weiterläuft, jedoch der weitere Verlauf für den erfindungsgemäßen Erfolg nicht relevant und somit hier nicht festgelegt ist. Beispielsweise kann sich dort ein ESP-Eingriff anschließen.

Die Wirkstärke ist wesentlich geringer als bei einer Überlagerungslenkung. Während eine Überlagerungslenkung den Lenkwinkelbedarf beliebig reduzieren kann, kann durch Torque Vectoring nur eine vergleichsweise kleine Reduktion des Lenkwinkelbedarfs erreicht werden, die aber groß genug ist, um für den Fahrer eine spürbar direktere Lenkübersetzung bereitzustellen. Die Analyse des Einspurmodells führt zu folgendem Zusammenhang für das querdynamische Stationärverhalten. Dem Torque Vectoring kann ein äquivalenter Lenkwinkel zugeordnet werden, der dem vom Fahrer eingestellten Lenkwinkel ö überlagert wird:

$$\delta_{L,\ddot{a}q} = i \cdot \frac{cv + ch}{l \cdot cv \cdot ch} \cdot M_{TVGier}$$

Das Differenzmoment führt zu einem Giermoment $M_{TVGier}$ auf das Fahrzeug. Abhängig von den Schräglaufsteifigkeiten cv bzw. ch der Vorder- und Hinterachse, dem Radstand I und der Lenkübersetzung i führt das Giermoment $M_{TVGier}$ zu einer stationären Gierrate, die man ohne Giermoment durch einen äquivalenten Lenkradwinkel $\delta_{L,\ddot{a}q}$ erreichen würde. In Fig. 2 ist ein Differenzmoment $M_{Diff}$ von 1000 Nm genannt, das einem Giermoment $M_{TVGier}$ von 2500 Nm entspricht und zu einem äquivalentem Lenkwinkel $\delta_{L,\ddot{a}q}$ von 25° führt. Das ist für den Fahrer deutlich spürbar und wird sehr positiv als verbesserte Fahrdynamik und verbesserter Lenkkomfort im Slalom oder bei Ausweichmanövern bewertet, wo hohe Lenkwinkel erforderlich sind.

Durch das Giermoment aus dem Torque Vectoring System stellt sich zusätzlich ein merklich höherer Schwimmwinkel $\beta$ ein als bei einer Erhöhung des Lenkwinkels um $\delta_{L,\ddot{a}q}$. Auch dies verstärkt den subjektiven Eindruck des Fahrers einer erhöhten Kurvengierigkeit.

Desweiteren ist umgekehrt auch die Verkleinerung der stationären Verstärkung von Lenkwinkel $\delta$ zu Gierrate $\dot{\psi}$ bzw. Querbeschleunigung $a_y$ und Schwimmwinkel $\beta$ denkbar (vgl. Verlauf e) in Fig. 3). Dies ist zum Beispiel bei hohen Geschwindigkeiten vorteilhaft, um einen Effekt wie eine indirektere Lenkübersetzung zu erreichen, durch die die Fahrzeugreaktionen auf Lenkeingaben gemildert werden.

Ferner kann durch die Ansteuerung der Vorrichtung 15 zur Verteilung eines Antriebsmoments eine von Lenkwinkel $\delta$ abhängige variable Lenkübersetzung dargestellt werden. Beispielsweise kann die Lenkübersetzung ausgehend von einer Mittelstellung eines Lenkrades mit zunehmendem Lenkwinkel abnehmen. Auch ein Einfluss der Fahrgeschwindigkeit ist möglich, dahingehend, dass bei geringer Fahrgeschwindigkeit die Wirkung einer direkteren, d.h. kleineren Lenkübersetzung, bei höherer Fahrgeschwindigkeit hingegen die Wirkung einer indirekteren, d.h. größeren Lenkübersetzung vorgegeben wird.

Eine entsprechende Funktionalität im Steuergerät und/oder einem Fahrzeugrechner für die Berechnung des Soll-Differenzmoments $M_{DiffSoll}$ könnte zum Beispiel eine Verstärkung K sein, die mit dem Lenkwinkel $\delta$ multipliziert wird:

$$M_{DiffSoll} = K (V,...) \cdot \dot{\delta}$$

Die Verstärkung K kann wiederum von Größen wie der Fahrgeschwindigkeit V oder anderen abhängig gemacht werden. Ihr Vorzeichen hängt davon ab, ob die stationäre Verstärkung vergrößert oder verkleinert werden soll. Desweiteren kann diese Verstärkung davon abhängig gemacht werden, ob sich das Fahrzeug im Linearbereich befindet (vgl. Fig. 3) oder im nicht-linearen Bereich.

Generell ist festzuhalten, dass das Soll-Differenzmoment $M_{DiffSoll}$ in Abhängigkeit des Lenkwinkels $\delta$ sowie gegebenenfalls weiterer Fahrzeugparameter z.B. mittels im Steuergerät abgelegter Berechnungsvorschriften, eines Kennfelds oder dergleichen ermittelt werden kann. Dabei ist der Zusammenhang zwischen $M_{DiffSoll}$ und $\delta$ nicht notwendigerweise linear. Insbesondere ist es denkbar, dass das über die Antriebsmomentverteilung maximal darstellbare TV-Giermoment nicht ausreicht, um z.B. bei größeren Lenkwinkeln eine Linearität der Abhängigkeit des Gierwinkels vom Lenkwinkel zu gewährleisten, so dass beispielsweise mit zunehmendem Lenkwinkel die Verstärkung durch die Antriebsmomentkomponente zurückgenommen werden kann. Eine solche Funktionalität, d.h. generell eine Abweichung von einer solchen Linearität, kann beispielsweise auch gezielt durch eine Abhängigkeit des Verstärkungsfaktors $f_{Lenkw2Gierrate}$ vom Lenkwinkel ö und/oder änderen Fahrzeugparametern realisiert werden, wie dies oben beispielhaft in Bezug auf das Soll-Differenzmoment $M_{DiffSoll}$ für die Fahrgeschwindigkeit angedeutet wurde.

Zum Erleben bzw. Erfahren dieser technischen Funktionalität im Fahrzeug sind weder schnelle Lenkbewegungen des Fahrers oder das Fahren mit hohen Querbeschleunigungen im Grenzbereich noch deutliche Gasstösse oder Bremseingaben bei Kurvenfahrt nötig, um die Wirksamkeit des Systems zu erhalten.

Wenn über ein für den Fahrer zugängliches Eingabeelement 24 diese Funktionalität aktiviert und deaktiviert werden kann, ist die Wirksamkeit des Torque Vectoring Systems auf das Fahrverhalten durch den Fahrer vornehmbar und leicht umschaltbar, wodurch das Fahrverhalten beeinflusst wird. Da der Fahrer sich schnell an eine geänderte Lenkverstärkung adaptiert, ist eine solche Umschaltmöglichkeit durch den Fahrer selbst wichtig, um die Lenkverstärkung erneut zu verändern und deren Einfluss auf das Fahrverhalten jederzeit wieder verdeutlichen zu können. Insbesondere kann durch ein Eingabeelement 24 die Möglichkeit geschaffen werden, zwischen einem Sportmodus und einem Normalmodus umzuschalten.

Eine Umschaltung kann auch fahrsituationsabhängig, insbesondere geschwindigkeits-, lenkwinkel-, giermoment- und/oder schwimmwinkelabhängig erfolgen. Dies hat den Vorteil, dass der Fahrer durch Umschaltung der Fahreigenschaften nicht in fahrkritische Situationen gerät. Dies ist auch relevant, sofern die Umschaltung versehentlich, beispielsweise durch den Beifahrer ausgelöst wird. Eine Umschaltung kann beispielsweise verzögert werden, bis eine Fahrsituation vorliegt, bei der die Umschaltung für den Fahrer unkritisch ist, d.h. er auf die geänderte Fahrsituation ausreichend reagieren kann. Im Gegensatz dazu wäre eine Umschaltung als kritisch einzustufen, wenn sich das Fahrzeug bereits an einer Stabilitätsgrenze befindet und die Umschaltung die Fahrstabilität gefährden würde oder könnte. Ebenfalls kritisch wäre es, wenn die Gefahr besteht, dass das Fahrzeug durch eine Umschaltung aus der Kurve getragen wird.

Weiterhin ist denkbar, diese Änderung der Stationärverstärkung abhängig von den Zuständen anderer Systeme abhängig zu machen, z. B. bei ESP-Eingriffen zu ändern. Im Normalmodus kann beispielsweise die ESP-Einsatzschwelle derart erhöht werden, dass zunächst eine Korrektur des Fahrzeuggiermoments durch das Torque Vectoring System erfolgt. Sofern dann eine über das Torque Vectoring System einspeisbare Giermomentkorrektur nicht weiter möglich ist, greift das ESP ein.

Die Erfindung wurde vorstehen anhand eines Ausführungsbeispiels näher erläutert. Sie ist jedoch nicht hierauf beschränkt, sondern umfasst alle durch die Patentansprüche definierten Ausgestaltungen.

Die Erfindung ermöglicht dem Normalfahrer bei seiner gewohnten Fahrweise im Linearbereich der Querdynamik einen deutlichen Zugewinn an erfahrbarer Fahrzeugdynamik, Fahrkomfort und Fahrsicherheit spüren kann. Sie ist darüber hinaus geeignet, die Kundenakzeptanz verhältnismäßig kostenintensiver Torque Vectoring Differenziale zu erhöhen.

### Bezugszeichenliste

| | |
|---|---|
| 10 | Fahrzeug |
| 11 | Vorderachse |
| 12 | Hinterachse |
| 13 | Antriebsmotor |
| 14 | Getriebe |
| 15 | Vorrichtung zur Verteilung eines Antriebsmoments |
| 16 | Vorderrad |
| 17 | Steuergerät |
| 18 | Lenkung |
| 19 | Lenkrad |
| 20 | Drehzahlsensor |
| 21 | Lenkwinkelsensor |
| 22 | Gierratensensor |
| 23 | Querbeschleunigungssensor |
| 24 | Schalter |

### Patentansprüche

1.  Kraftfahrzeug, welches in einem Linearbereich der Querdynamik als auch in einem daran anschließenden querdynamischen Grenzbereich betreibbar ist, umfassend:

    eine Fahrzeuglenkung (18) mit mechanisch bedingter Lenkverstärkung,
    mindestens eine Vorrichtung (15) zur Verteilung eines Antriebsmoments auf die Räder einer angetriebenen Fahrzeugachse (11) gemäß einem vorgebbaren Verteilungssollwert, und
    ein Steuergerät (17), welches in Abhängigkeit von Signalen am Fahrzeug befindlicher Sensoren sowie im Steuergerät abgelegter Algorithmen den Verteilungssollwert ermittelt,
    **dadurch gekennzeichnet, dass**
    das Steuergerät (17) den Verteilungssollwert derart ermittelt, dass im Linearbereich der Querdynamik einem über die Fahrzeuglenkung erzeugten Giermoment ein durch die mindestens eine Vorrichtung (15) zur Verteilung eines Antriebsmoments erzeugtes zusätzliches Giermoment überlagert wird, indem eine stationäre Lenkverstärkung ($f_{Lenkw2GierraleTV}$) bestimmt wird, die von der rein mechanisch bedingten Lenkverstärkung ($f_{Lenkw2Gierrate}$) der Lenkung um den Verteilungssollwert abweicht.

2.  Kraftfahrzeug nach Anspruch 1, **dadurch gekennzeichnet, dass** das Steuergerät (17) im Linearbereich der Querdynamik einen stationären Verstärkungsfaktor bestimmt, der definiert ist als:

$$f_{\text{Lenkw2Gierrate}} = \dot{\Psi} / \delta$$

oder

$$f_{\text{Lenkw2Schwimmw}} = \dot{\beta} / \delta$$

oder

$$f_{\text{Lenkw2Querbeschl}} = a_y / \delta,$$

wobei $\delta$ den Lenkwinkel, $\dot{\psi}$ die Gierrate, $a_y$ die Querbeschleunigung und $\beta$ den Schwimmwinkel repräsentiert, wobei der stationäre Verstärkungsfaktor eine über die Lenkung erzeugte Komponente und eine durch die mindestens eine Vorrichtung (15) zur Verteilung eines Antriebsmoments erzeugte Komponente aufweist, und letztere als Verteilungssollwert der mindestens einen Vorrichtung (15) zur Verteilung eines Antriebsmoments aufgeschaltet ist.

3. Kraftfahrzeug nach Anspruch 1 oder 2, **dadurch gekennzeichnet, dass** das Steuergerät (17) derart konfiguriert ist, dass durch die mindestens eine Vorrichtung (15) zur Verteilung eines Antriebsmoments das über die Fahrzeuglenkung erzeugte Giermoment erhöht wird.

4. Kraftfahrzeug nach Anspruch 1 oder 2, **dadurch gekennzeichnet, dass** das Steuergerät (17) derart konfiguriert ist, dass durch die mindestens eine Vorrichtung (15) zur Verteilung eines Antriebsmoments das über die Fahrzeuglenkung erzeugte Giermoment vermindert wird.

5. Kraftfahrzeug nach Anspruch 1 oder 2, **dadurch gekennzeichnet, dass** das Steuergerät (17) derart konfiguriert ist, dass durch die Ansteuerung der Vorrichtung zur Verteilung eines Antriebsmoments die Wirkung einer vom Lenkwinkel abhängigen variablen Lenkübersetzung dargestellt wird.

6. Kraftfahrzeug nach Anspruch 5, **dadurch gekennzeichnet, dass** die Lenkübersetzung ausgehend von einer Mittelstellung eines Lenkrades mit zunehmendem Lenkwinkel abnimmt.

7. Kraftfahrzeug nach Anspruch 5 oder 6, **dadurch gekennzeichnet, dass** das die Lenkübersetzung fahrgeschwindigkeitsabhängig ist, derart, dass bei geringer Fahrgeschwindigkeit die Wirkung einer direkteren, d.h. kleineren Lenkübersetzung, bei höherer Fahrgeschwindigkeit hingegen die Wirkung einer indirekteren, d.h. größeren Lenkübersetzung vorgegeben wird.

8. Kraftfahrzeug nach einem der Ansprüche 1 bis 7, **dadurch gekennzeichnet, dass** ein Lenkwinkelsensor (21) zur Erzeugung eines Lenkwinkelsignals vorgesehen ist und der Verteilungssollwert vom Lenkwinkel und gegebenenfalls weiteren Parametern abhängig ist.

9. Kraftfahrzeug nach Anspruch 8, **dadurch gekennzeichnet, dass** der Lenkwinkel als Faktor in die mathematische Funktion für den Verteilungssollwert eingeht.

10. Kraftfahrzeug nach Anspruch 8 oder 9, **dadurch gekennzeichnet, dass** der Verteilungssollwert eine mathematische Funktion aus dem Produkt des Lenkwinkels und eines gegebenenfalls fahrgeschwindigkeitsabhängigen Verstärkungsfaktors K ist.

11. Kraftfahrzeug nach einem der Ansprüche 1 bis 10, **dadurch gekennzeichnet, dass** die Antriebsmomentkomponente manuell zu- und ausschaltbar ist.

12. Kraftfahrzeug nach einem der Ansprüche 1 bis 11, **dadurch gekennzeichnet, dass** das Steuergerät (17) ein Aktivierungs- und Deaktivierungssignal berücksichtigt, wobei bei einem Aktivierungssignal ein Verteilungssollwert zumindest abschnittsweise variabel in Abhängigkeit des Lenkwinkels und bei einem Deaktivierungssignal ein konstanter Verteilungssollwert berücksichtigt wird.

13. Kraftfahrzeug nach Anspruch 12, **dadurch gekennzeichnet, dass** das Aktivierungs- und Deaktivierungssignal fahrsituationsabhängig, insbesondere geschwindigkeits-, lenkwinkel-, giermoment- und/oder schwimmwinkelabhängig, ist.

14. Kraftfahrzeug nach Anspruch 13, **dadurch gekennzeichnet, dass** die fahrsituationsabhängige Berücksichtigung des Aktivierungs- oder Deaktivierungssignals eine verzögerte Berücksichtigung oder gleitende Überleitung von einem ersten Beeinflussungszustand in mindestens einen zweiten Beeinflussungszustand umfasst.

15. Verfahren zur Beeinflussung der Fahrzeugquerdynamik eines Kraftfahrzeugs, welches in einem Linearbereich der Querdynamik als auch in einem daran anschließenden querdynamischen Grenzbereich betreibbar ist und mit einer Fahrzeuglenkung (18) mit mechanisch bedingter Lenkverstärkung und mindestens einer Vorrichtung (15) zur Verteilung eines Antriebsmoments auf die Räder (16) einer angetriebenen Fahrzeugachse (11) gemäß einem vorgebbaren Verteilungssollwert ausgestattet ist,
**dadurch gekennzeichnet, dass** im Linearbereich der Querdynamik in Abhängigkeit von Signalen am Fahrzeug befindlicher Sensoren sowie vorgehaltener Algorithmen der Verteilungssollwert derart ermittelt wird, dass einem über die Fahrzeuglenkung erzeugten Giermoment ein durch die mindestens eine Vorrichtung (15) zur Verteilung eines Antriebsmoments erzeugtes zusätzliches Giermoment überlagert wird, indem eine stationäre Lenkverstärkung ($f_{Lenkw2GierrateTV}$) bestimmt wird, die von der rein mechanisch bedingten Lenkverstärkung ($f_{Lenkw2Gierrate}$) der Lenkung um den Verteilungssollwert abweicht.

**Claims**

1. Motor vehicle which can be operated in a linear range of transverse dynamics as well as in an adjoining transverse-dynamics adjacent region, comprising:

   a vehicle steering system (18) with mechanically conditioned boosting of the steering,
   at least one device (15) for distributing a drive torque along the wheels of a driven vehicle axle (11) according to a predefinable distribution setpoint value, and
   a control unit (17) which determines the distribution setpoint value as a function of signals of sensors located on the vehicle as well as an algorithm which is stored in the control unit,
   **characterized in that**
   the control unit (17) determines the distribution setpoint value in such a way that in the linear range of the transverse dynamics an additional yaw moment which is generated by the at least one device (15) for distributing a drive torque is superimposed on a yaw moment which is generated by means of the vehicle steering system,
   **in that** steady-state boosting ($f_{Lenkw2GierrateTV}$) of the steering is determined, which deviates from the purely mechanically conditioned boosting ($f_{Lenkw2GierrateTV}$) of the steering system by the distribution setpoint value.

2. Motor vehicle according to Claim 1, **characterized in that** the control unit (17) determines, in the linear range of the transverse dynamics, a steady-state boosting factor which is defined as:

$$f_{Lenkw2Gierrate} = \psi \ / \ \sigma$$

or

$$f_{Lenkw2Schwimmw} = \beta \ / \ \sigma$$

or

$$f_{Lenkw2Querbeschl} = a_y \ / \ \sigma,$$

wherein $\sigma$ is the steering angle, $\psi$ is the yaw rate, $a_y$ is the transverse acceleration and $\beta$ represents the attitude angle, wherein the steady-state boosting factor has a component which is generated by means of the steering system and has a component which is generated by means of the at least one device (15) for distributing a driving torque and the latter is applied as a distribution setpoint value of the at least one device (15) for distributing a driving torque.

3. Motor vehicle according to Claim 1 or 2, **characterized in that** the control unit (17) is configured in such a way that the yaw moment which is generated by means of the vehicle steering system is increased by the at least one device (15) for distributing a driving torque.

4. Motor vehicle according to Claim 1 or 2, **characterized in that** the control unit (17) is configured in such a way that the yaw moment which is generated by means of the vehicle steering system is reduced by the at least one device (15) for distributing a driving torque.

5. Motor vehicle according to Claim 1 or 2, **characterized in that** the control unit (17) is configured in such a way that the effect of a variable steering transmission ratio which is dependent on the steering angle is represented by the actuation of the device for distributing a driving torque.

6. Motor vehicle according to Claim 5, **characterized in that** the steering transmission ratio decreases from a centre position of a steering wheel as the steering angle increases.

7. Motor vehicle according to Claim 5 or 6, **characterized in that** the steering transmission ratio is velocity-dependent such that at a low velocity the effect of a relatively direct, i.e. relatively small, steering transmission ratio is predefined, while at a relatively high velocity conversely the effect of a relatively indirect, i.e. relatively large steering transmission ratio is predefined.

8. Motor vehicle according to one of Claims 1 to 7, **characterized in that** a steering angle sensor (21) is provided for generating a steering angle signal, and the distribution setpoint value is dependent on the steering angle and, if appropriate, on further parameters.

9. Motor vehicle according to Claim 8, **characterized in that** the steering angle is included as a factor in the mathematical function for the distribution setpoint value.

10. Motor vehicle according to Claim 8 or 9, **characterized in that** the distribution setpoint value is a mathematical function formed from the product of the steering angle and a boosting factor K which is, if appropriate, dependent on the velocity.

11. Motor vehicle according to one of Claims 1 to 10, **characterized in that** the driving torque component can be activated and deactivated manually.

12. Motor vehicle according to one of Claims 1 to 11, **characterized in that** the control unit (17) takes into account an activation signal and deactivation signal, wherein in the case of an activation signal a distribution setpoint value is at least partially taken into account in a variable fashion as a function of the steering angle, and in the case of a deactivation signal a constant distribution setpoint value is taken into account.

13. Motor vehicle according to Claim 12, **characterized in that** the activation signal and the deactivation signal are driving-situation-dependent, in particular dependent on the speed, steering angle, yaw moment and/or attitude angle.

14. Motor vehicle according to Claim 13, **characterized in that** taking into account the activation signal or deactivation signal as a function of the driving situation comprises delayed consideration or sliding transfer from a first influencing state into at least a second influencing state.

15. Method for influencing the vehicle transverse dynamics of a motor vehicle, which method can be operated in a linear range of the transverse dynamics and in an adjoining transverse-dynamics adjacent region, and having a vehicle steering system (18) with mechanically conditioned boosting of the steering, and having at least one device (15) for distributing a driving torque along the wheels (16) of a driven vehicle axle (11) is equipped according to a predefinable distribution setpoint value,
**characterized in that**
in the linear range of the transverse dynamics the distribution setpoint value is determined as a function of signals of sensors located on the vehicle and of algorithms which are provided, in such a way that an additional yaw moment which is generated by the at least one device (15) for distributing a driving torque is superimposed on a yaw moment which is generated by means of the vehicle steering system, **in that** steady-state boosting ($f_{Lenkw2GierrateTV}$) of the steering is determined, which differs from the purely mechanically conditioned boosting ($f_{Lenkw2Gierrate}$) of the steering system by the distribution setpoint value.

**Revendications**

1. Véhicule automobile qui peut être utilisé dans une plage linéaire de la dynamique transversale ainsi que dans une plage limite dynamique transversale qui vient s'y rattacher, comprenant :

    une direction de véhicule (18) munie d'une amplification de direction provoquée mécaniquement,
    au moins un dispositif (15) de distribution d'un couple d'entraînement sur les roues d'un essieu de véhicule (11) entraîné conformément à une valeur de consigne de distribution qui peut être prédéfinie, et
    un contrôleur (7) qui détermine la valeur de consigne de distribution en fonction de signaux de capteurs qui se trouvent sur le véhicule ainsi que d'algorithmes stockés dans le contrôleur,
    **caractérisé en ce que**
    le contrôleur (17) détermine la valeur de consigne de distribution de telle sorte que, dans la plage linéaire de la dynamique transversale, un couple de lacet supplémentaire généré par l'au moins un dispositif (15) de distribution d'un couple d'entraînement est superposé à un couple de lacet généré par le biais de la direction du véhicule en déterminant une amplification de direction fixe ($f_{Lenkw2GierrateTV}$), laquelle diffère de l'amplification de direction provoquée purement mécaniquement ($f_{Lenkw2Gierrate}$) de la direction de la valeur de consigne de distribution.

2. Véhicule automobile selon la revendication 1, **caractérisé en ce que** le contrôleur (17) détermine dans la plage linéaire de la dynamique transversale un facteur d'amplification fixe qui est défini en tant que :

$$f_{Lenkw2Gierrate} = \dot{\psi}/\delta$$

ou

$$f_{Lenkw2Schwimmw} = \text{ß}/\delta$$

ou

$$f_{Lenkw2Querbschl} = a_y/\delta,$$

$\delta$ représentant ici l'angle de direction, $\dot{\psi}$ le taux de lacet, $a_y$ l'accélération transversale et ß l'angle de flottement, le facteur d'amplification fixe présentant une composante générée par le biais de la direction et une composante générée par le biais de l'au moins un dispositif (15) de distribution d'un couple d'entraînement, et cette dernière étant appliquée en tant que valeur de consigne de distribution à l'au moins un dispositif (15) de distribution d'un couple d'entraînement.

3. Véhicule automobile selon la revendication 1 ou 2, **caractérisé en ce que** le contrôleur (17) est configuré de telle sorte que le couple de lacet généré par le biais de la direction du véhicule est augmenté par l'au moins un dispositif (15) de distribution d'un couple d'entraînement.

4. Véhicule automobile selon la revendication 1 ou 2, **caractérisé en ce que** le contrôleur (17) est configuré de telle sorte que le couple de lacet généré par le biais de la direction du véhicule est réduit par l'au moins un dispositif (15) de distribution d'un couple d'entraînement.

5. Véhicule automobile selon la revendication 1 ou 2, **caractérisé en ce que** le contrôleur (17) est configuré de telle sorte que l'effet d'une démultiplication variable de la direction dépendante de l'angle de direction est représenté par la commande du dispositif de distribution d'un couple d'entraînement.

**6.** Véhicule automobile selon la revendication 5, **caractérisé en ce que** la démultiplication de la direction diminue à partir d'une position centrale d'un volant de direction à mesure que l'angle de direction augmente.

**7.** Véhicule automobile selon la revendication 5 ou 6, **caractérisé en ce que** la démultiplication de la direction est dépendante de la vitesse de déplacement, de sorte qu'en présence d'une vitesse de déplacement faible, l'effet d'une démultiplication de la direction plus directe, c'est-à-dire plus petite, est prédéfini, alors qu'en présence d'une vitesse de déplacement plus élevée, l'effet d'une démultiplication de la direction plus indirecte, c'est-à-dire plus importante, est prédéfini.

**8.** Véhicule automobile selon l'une des revendications 1 à 7, **caractérisé en ce qu'**il est prévu un capteur d'angle de direction (21) pour générer un signal d'angle de direction et la valeur de consigne de distribution dépend de l'angle de direction et éventuellement de paramètres supplémentaires.

**9.** Véhicule automobile selon la revendication 8, **caractérisé en ce que** l'angle de direction intervient en tant que facteur dans la fonction mathématique de la valeur de consigne de distribution.

**10.** Véhicule automobile selon la revendication 8 ou 9, **caractérisé en ce que** la valeur de consigne de distribution est une fonction mathématique du produit de l'angle de direction et d'un facteur d'amplification K, éventuellement dépendant de la vitesse de déplacement.

**11.** Véhicule automobile selon l'une des revendications 1 à 10, **caractérisé en ce que** la composante de couple d'entraînement peut être mise en circuit ou hors circuit manuellement.

**12.** Véhicule automobile selon l'une des revendications 1 à 11, **caractérisé en ce que** le contrôleur (17) tient compte d'un signal d'activation et de désactivation, une valeur de consigne de distribution qui est au moins partiellement variable en fonction de l'angle de direction étant prise en considération dans le cas d'un signal d'activation et une valeur de consigne de distribution constante étant prise en considération dans le cas d'un signal de désactivation.

**13.** Véhicule automobile selon la revendication 12, **caractérisé en ce que** le signal d'activation et de désactivation est dépendant de la situation de conduite, notamment dépendant de la vitesse, de l'angle de direction, du couple de lacet et/ou de l'angle de flottement.

**14.** Véhicule automobile selon la revendication 13, **caractérisé en ce que** la prise en compte dépendante de la situation de conduite du signal d'activation et de désactivation comprend une prise en compte retardée ou une transition en douceur d'un premier état d'influence en au moins un deuxième état d'influence.

**15.** Procédé pour influencer la dynamique transversale de véhicule d'un véhicule automobile, lequel peut être utilisé dans une plage linéaire de la dynamique transversale ainsi que dans une plage limite dynamique transversale qui vient s'y rattacher, et est équipé d'une direction de véhicule (18) munie d'une amplification de direction provoquée mécaniquement et d'au moins un dispositif (15) de distribution d'un couple d'entraînement sur les roues (16) d'un essieu de véhicule (11) entraîné conformément à une valeur de consigne de distribution qui peut être prédéfinie, **caractérisé en ce que**
dans la plage linéaire de la dynamique transversale la valeur de consigne de distribution est déterminée en fonction de signaux de capteurs qui se trouvent sur le véhicule ainsi que d'algorithmes disponibles de telle sorte qu'un couple de lacet supplémentaire généré par l'au moins un dispositif (15) de distribution d'un couple d'entraînement est superposé à un couple de lacet généré par le biais de la direction du véhicule en déterminant une amplification de direction fixe ($f_{Lenkw2GierrateTV}$), laquelle diffère de l' amplification de direction provoquée purement mécaniquement ($f_{Lenkw2Gierrate}$) de la direction de la valeur de consigne de distribution.

Fy

maximale
Seitenkraft

α

Linearbereich
der Querdynamik

nichtlinearer
Bereich der
Querdynamik

Grenzbereich
der Querdynamik

## FIG. 1

12

$M_{TVGier} = 2500\ Nm$

11    16L

10

-500 Nm

14

17

$M_{diff} = 1000\ Nm$

13

15

500 Nm

16R

## FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10317316 A1
- DE 102004001019 A1
- DE 102005040253 B3
- DE 102007020356 A1
- US 7267628 B2
- US 2007005214 A1
- GB 2435023 A